# EUROPEAN PATENT SPECIFICATION

(11) **EP 1 328 411 B1**
(45) Date of publication and mention of the grant of the patent: **25.08.2004**
(21) Application number: 01940875.6
(22) Date of filing: 13.06.2001
(51) Int. Cl.: B60D 1/155, B60D 1/50

(54) **TELESCOPIC TOWBAR**
TELESKOPISCHE ZUGDEICHSEL
TIMON TELESCOPIQUE

(30) Priority: 19.10.2000 CH 205200
(43) Date of publication of application: 23.07.2003
(73) Proprietor: Guelli, Oliviero, CH-6932 Breganzona (CH); Van Paassen, Theodora, 6900 Lugano (CH)
(72) Inventor: GUELLI, Oliviero, CH-6932 Breganzona (CH)
(74) Representative: Fiammenghi-Domenighetti, Delfina
(86) International application number: PCT/IB2001/001024
(87) International publication number: WO 2002/032700

(56) References cited:
- DE-A- 1 755 550
- DE-C- 818 730
- DE-U- 1 708 047
- DE-U- 29 816 329
- FR-A- 2 639 697
- GB-A- 2 146 962
- GB-A- 2 307 890
- LU-A- 87 454
- US-A- 1 375 056
- US-A- 1 583 806

## Description

The present invention relates to accessories for motor vehicles and more particularly to those accessories which are used for towing one motor vehicle by means of another, and which are made in the form of a bar comprising a straight part, fixed to the ends of which are devices (hooks or shackles) for connecting it to the towing hooks of the two motor vehicles.

In the current state of the art these bars are produced either as a single piece of large dimensions, or as a number of folding segments hinged end-to-end to each other.

Both configurations described above have however limits and drawbacks: that described first has the drawback of its large dimensions, and the second that of a fragility at the joints between the various segments, which compromises how long it can be reliably used.

Furthermore, in neither case is there any means of damping the axial stresses acting on the towbar when being used to tow a vehicle.

To avoid all these drawbacks, the inventor of the present innovation has devised a towbar according to claim 1.

The subject of the invention is therefore a towbar as described in the preamble of the appended Claim 1, characterized by the characterizing part of the same claim.

A preferred illustrative embodiment of a towbar according to the invention will now be described in greater detail, and the description will also refer to the accompanying drawings, which show:
- in Figure 1 a side view with partial cutaway of the said illustrative embodiment of a towbar according to the invention comprising three coaxial segments; and
- in Figure 2 a cross section through the bar shown in Figure 1.

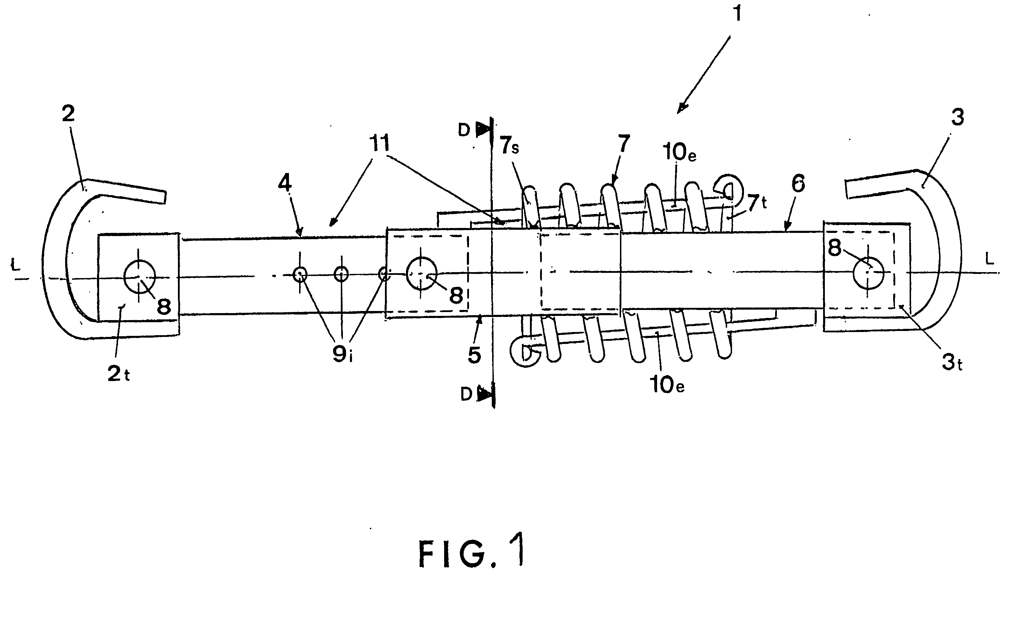

As can be seen clearly in Figure 1, the towbar 1 of the invention comprises a straight part whose ends have two hooks 2, 3 of known type, their configuration being such that they can be coupled to the towing hooks (not shown) of two vehicles positioned one behind the other.

The inside of the said hooks 2, 3 can also be coated with a damping and soundproofing material such as any of the rubbers or other elastomers in order to prevent troublesome noises caused by shocks during operation (this provision is not shown in the figures).

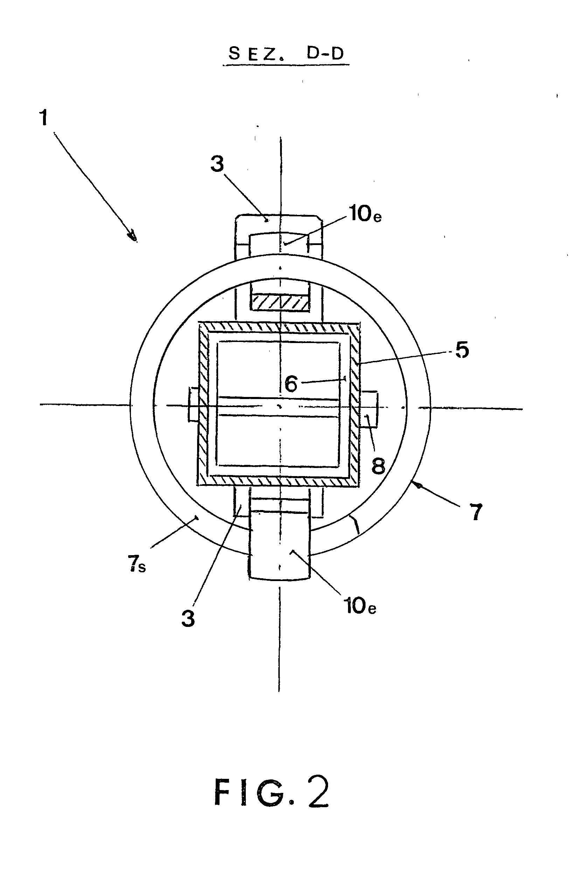

The abovementioned straight part 11 comprises two consecutive segments 5, 6 capable of sliding telescopically one inside the other. In order to prevent unwanted relative rotations, the inventor envisages that the hollow cross section of the said two consecutive segments 5, 6, and in general that of all the segments 4, 5, 6 making up a towbar 1, are of polygonal shape, preferably quadrilateral as shown in Figure 2.

Between the said two consecutive segments 5, 6 is a helical torsion spring 7 which is coaxially external to them and connected to them by the two final turns 7s, 7t situated at its two ends.

The fact that the spring 7 is positioned externally to the consecutive segments 5, 6 means that its structure can also be used to resist bending stresses to which the towbar 1 may be subjected.

This spring 7, as stated, provides progressive damping of axial shocks and stresses acting on the towbar 1.

A number of additional coaxial segments, only one 4 in the case considered, can also be attached coaxially and reversibly (for example by means of a quick-fitting through bolt 8) to one end of one 5 of the said two consecutive segments 5, 6, in such a way that the total length of the towbar 1 can be extended telescopically by a predetermined length.

Two devices 2, 3 for hitching the bar to towing hooks or other parts of a motor vehicle are also attached to the ends of the towbar 1, on the outermost end parts of the assembly made up of the coaxial segments 4, 5, 6 (the extra segment 4 being optional only).

If a number of holes 9i are made in the said segment 4 which is connected to the two consecutive segments 5, 6 for insertion of one of the said bolts 8, this segment 4 can be slid telescopically inside that segment 5 which is to be connected to it, before securing it with a bolt 8, thus giving the towbar 1 the most appropriate length for each particular application. (As mentioned, if the length of the said segments 5, 6 is sufficient, the extra segment 4 need not be present).

The said hitching devices 2, 3 should also preferably be made with a tubular part 2t, 3t that fits coaxially and telescopically onto the end of the segment 4, 6 to which it is to be fixed, before securing it with a through bolt 8 of the type described above.

It is therefore possible to fit different forms of hitching device to suit the particular application, e.g. two hooks 2, 3 as indicated in the figures, suitable for towing vehicles provided with hitching parts or devices of a variety of shapes.

As far as the said helical torsion spring 7 is concerned, its two final turns 7s, 7t may be fastened by various different systems to each of the two consecutive segments which slide telescopically, in such a way as appropriately to damp their relative sliding velocity: for example, they may be fixed to collars welded or fastened to the said segments 5, 6 (this embodiment not shown).

A solution preferred by the inventor is to weld or otherwise fix to each of the said two consecutive segments 5,6 one end of each of a number of long elements 10e (two in total in the figure but four or more are also possible) which run all the way through the helical spring 7 parallel to its longitudinal axis L-L and which terminate at the other end which is wrapped transversely around one of its said two final turns 7s, 7t. This solution has been found to be the most economical without in any way reducing the functional reliability of the towbar 1 of the invention.

All the component parts of the invention can however have shapes, positions and fixing methods different from those illustrated in the figures.

It should be added that each of the component segments of a towbar according to the invention can be made in one piece or from a number of parts fixed together, and can be made from the most suitable materials such as metals (steel, aluminium) and their alloys.

## Claims

1. Towbar (1) composed of a straight part (11) terminating at its ends in two devices (2, 3) for hitching it to part of the structure of a motor vehicle, the said straight part (11) consisting of a plurality of coaxially aligned telescopic tubular segments (4, 5, 6), of which at least two consecutive segments (5, 6) are capable of sliding coaxially one inside the other, and between these (5, 6) is an elastic element (7) capable of damping the axial stresses to which the towbar (1) is subject when towing a motor vehicle, said elastic element being a helical torsion spring (7) coaxially external to the said two consecutive segments (5, 6) between which it is interposed, and is connected to them via its two final turns (7s, 7t), **characterised in that** said elastic element (7) is connected to the final turns (7s, 7t) by means of a plurality of long elements (10e) that run through it parallel to its longitudinal axis (L-L), each long element (10e) being fixed at one end to one of the said consecutive segments (5, 6) and being wrapped at the other end transversely around a final turn (7s, 7t) of the said spring (7).

2. Towbar according to claim 1, in which at least one other segment (4) is connected reversibly to the said two consecutive segments (5, 6) and is aligned coaxially with them and constructed in such a way that it can slide telescopically before being secured.

3. Towbar according to one of the previous claims, in which the cross section of all of the segments (4, 5, 6) of which it is composed is in the form of a polygon.

4. Towbar according to Claim 3, in which the said polygon is quadrilateral.

## Patentansprüche

1. Abschleppstange (1), die aus einem geradlinigen Teil (11) gebildet ist, der an seinen Enden in zwei Vorrichtungen (2, 3) endet, mit denen sie an einem Teil des Aufbaus eines Kraftfahrzeugs angebracht werden kann, wobei der geradlinige Teil (11) aus mehreren koaxial ausgerichteten, teleskopförmigen Rohrsegmenten (4; 5, 6) besteht, wovon wenigstens zwei aufeinander folgende Segmente (5, 6) koaxial ineinander gleiten können und wobei zwischen diesen (5, 6) ein elastisches Element (7) vorhanden ist, das die axialen Beanspruchungen dämpfen kann, denen die Abschleppstange (1) unterliegt, wenn ein Kraftfahrzeug abgeschleppt wird, wobei das elastische Element eine schraubenlinienförmige Torsionsfeder (7) ist, die sich koaxial außerhalb der zwei aufeinander folgenden Segmente (5, 6), zwischen denen sie eingefügt ist, befindet und mit diesen über ihre zwei Stirnwindungen (7s, 7t) verbunden ist, **dadurch gekennzeichnet, dass** das elastische Element (7) mit den Stirnwindungen (7s, 7t) mittels mehrerer langer Elemente (10e) verbunden ist, die durch das lange Element (7) parallel zu seiner Längsachse (L-L) verlaufen, wobei jedes lange Element (10e) an einem Ende an einem der aufeinander folgenden Segmente (5, 6) befestigt ist und am anderen Ende transversal um eine Stirnwindung (7s, 7t) der Feder (7) gewunden ist.

2. Abschleppstange nach Anspruch 1, bei der wenigstens ein anderes Segment (4) reversibel mit den zwei aufeinander folgenden Segmenten (5, 6) verbunden ist, auf diese koaxial ausgerichtet ist und in der Weise konstruiert ist, dass es teleskopartig gleiten kann, bevor es befestigt ist.

3. Abschleppstange nach einem der vorhergehenden Ansprüche, bei der der Querschnitt aller Segmente (4, 5, 6), aus denen sie zusammengesetzt ist, die Form eines Polygons hat.

4. Abschleppstange nach Anspruch 3, bei der das Polygon vierseitig ist.

## Revendications

1. Barre de remorquage (1) composée d'une partie droite (11) qui se termine à ses extrémités par deux dispositifs (2, 3) destinés à l'atteler à une partie de la structure d'un véhicule automobile, la partie droite (11) se composant de plusieurs segments tubulaires télescopiques (4, 5, 6) qui sont alignés coaxialement et parmi lesquels au moins deux segments consécutifs (5, 6) sont aptes à coulisser coaxialement l'un dans l'autre, et entre ces segments (5, 6) est prévu un élément élastique (7) apte à amortir les contraintes axiales auxquelles la barre de remorquage (1) est soumise lors du remorquage d'un véhicule automobile, ledit élément élastique consistant en un ressort de torsion hélicoïdal (7) placé coaxialement sur l'extérieur des deux segments consécutifs (5, 6) entre lesquels il est intercalé, et étant relié à ceux-ci par ses deux spires d'extrémité (7s, 7t),
**caractérisée en ce que** l'élément élastique (7) est relié aux spires d'extrémité (7s, 7t) à l'aide de plusieurs éléments longs (10e) qui le traversent parallèlement à son axe longitudinal (L-L), chaque élément long (10e) étant fixé, à une extrémité, à l'un des segments consécutifs (5, 6) et étant enroulé, à l'autre extrémité, transversalement autour d'une spire (7s, 7t) du ressort (7).

2. Barre de remorquage selon la revendication 1, dans laquelle au moins un autre segment (4) est relié de manière réversible aux deux segments consécutifs (5, 6), est aligné coaxialement par rapport à ceux-ci et est conçu pour pouvoir coulisser de manière télescopique avant d'être fixé.

3. Barre de remorquage selon l'une des revendications précédentes, dans laquelle la section transversale de tous les segments (4, 5, 6) qui la composent a la forme d'un polygone.

4. Barre de remorquage selon la revendication 3, dans laquelle le polygone est un quadrilatère.
